# EUROPEAN PATENT APPLICATION

(11) **EP 2 613 228 A1**
(43) Date of publication of application: **10.07.2013**
(21) Application number: 13150299.9
(22) Date of filing: 04.01.2013
(51) Int. Cl.: G06F 3/01, G06F 3/023

(54) **Display apparatus and method of editing displayed letters in the display apparatus**

(30) Priority: 05.01.2012 KR 20120001350
(71) Applicant: Samsung Electronics Co., Ltd, Gyeonggi-do 443-742 (KR)
(72) Inventor: Lee, Dong-jin, Gyeonggi-do (KR); Lee, Hye-jeong, Seoul (KR); Choi, Sung-wook, Seoul (KR)
(74) Representative: Taor, Simon Edward William

(57) **Abstract**

A display apparatus and method of editing displayed letters in the display apparatus is provided. The display apparatus includes an input unit for displaying a plurality of input letters in response to receiving a user command; a display unit for, when a plurality of letters is input through the input unit, displaying the plurality of the input letters; and a control unit for selecting a character string including the selected letter and controlling the display unit to divide and display the selected character string based on a preset edit unit when a selection command is input for at least one of the plurality of the displayed letters through the input unit, selecting a character string comprising the selected letter and controlling the display unit to divide and display the selected character string based on a preset edit unit. The control unit edits the selected character string based on the preset edit unit according to a user command of editing the letters.

## Description

The present general inventive concept relates generally to a display apparatus and a method for editing letters displayed in the display apparatus. More particularly, the present general inventive concept relates to a display apparatus for editing incorrect letters and a method for editing the incorrect letters displayed in the display apparatus.

Character input devices are miniaturized in accordance with small-sized electronic devices. To input letters, methods of inputting the letters in a display screen using the existing keyboard and a touch pad or a pointing device are also developed.

When the letters are input using the touch pad or the pointing device in the small display apparatus, an incorrect input letter is modified often. In so doing, a user can specify and edit the incorrect letter to his/her intended letter by moving a pointer to the incorrect letter or tapping the incorrect letter.

At this time, it takes a considerable time to move the pointer to a particular letter or to tap a particular letter in the small display screen, and an unintended letter is selected frequently. To avoid such situations, it is common to delete and re-input the entire word or letter. As a result, the letter editing requires much time and effort.

An aspect of the present general inventive concept has been provided to solve the above-mentioned and/or other problems and disadvantages and an aspect of the present general inventive concept provides a display apparatus for easily selecting a letter to edit in a display screen and easily editing the selected letter, and a method for editing the letters displayed in the display apparatus.

According to an aspect of the present general inventive concept, a method for editing letters displayed in a display apparatus includes displaying a plurality of letters input by a user; when a selection command is input for at least one of the plurality of the displayed letters, selecting a character string including the selected letter; dividing and displaying the selected character string based on a preset edit unit; and editing the selected character string based on the preset edit unit according to a user command. The operation for dividing and displaying based on the preset edit unit may display, as separate icons, the selected character string divided into the preset edit unit.

The operation for dividing and displaying based on the preset edit unit may enlarge and display the selected character string.

The operation for dividing and displaying based on the preset edit unit may display the selected character string in at least one of an original form input by the user and an anticipated modification form of the selected character string.

The operation for dividing and displaying based on the preset edit unit may determine whether it is necessary to modify the selected character string, divide and display only a part of the selected character string to modify based on the preset edit unit.

The preset edit unit may be at least one of a word, a syllable, a phoneme, a number, and a symbol.

When an icon which corresponds to the preset edit unit is selected, the operation for editing the selected character string may perform at least one of modification, deletion and location change of the selected icon, according to a user command.

The user command may be at least one of drag and drop, flicking, pointing, click and tap.

When a region between at least two icons which corresponds to the preset edit unit is selected, the operation for editing the selected character string may insert an icon which corresponds to a new input letter into the selected region according to the user command.

The display apparatus may receive the letter using an On Screen Keyboard (OSK).

A display apparatus includes an input unit for receiving a user command; a display unit for, when a plurality of letters is input through the input unit, displaying the plurality of the input letters; and a control unit for, when a selection command is input for at least one of the plurality of the displayed letters through the input unit, selecting a character string including the selected letter and controlling the display unit to divide and display the selected character string based on a preset edit unit. The control unit may edit the selected character string based on the preset edit unit according to a user command for editing the letters.

The display unit may display the character string divided into the preset edit unit as separate icons. The display unit may enlarge and display the selected character string.

The display unit may display the selected character string in at least one of an original form input by the user and an anticipated modification form of the selected character string.

The control unit may determine whether it is necessary to modify the selected character string, and control the display unit to divide and display only a part to modify of the selected character string based on the preset edit unit.

The preset edit unit may be at least one of a word, a syllable, a phoneme, a number, and a symbol.

The control unit may select an icon which corresponds to the preset edit unit and perform at least one of modification, deletion, and location change of the selected icon according to the user command for editing the letters.

The user command for editing the letters may be at least one of drag and drop, flicking, pointing, click and tap.

The control unit may select a region between at least two icons which corresponds to the preset edit unit and insert an icon which corresponds to a new input letter into the selected region according to the user command for editing the letters. The display apparatus may receive the letter using an On Screen Keyboard (OSK).

A further exemplary embodiment of the general inventive concept may include a method of editing letters displayed on a display apparatus, the method including displaying a plurality of input letters; selecting a character string including a selected letter in response to a selection command being input for at least one of the displayed letters; dividing and displaying the selected character string based on a preset edit unit; and editing the selected character string based on the preset edit unit. The plurality of letters and the selected character string may be input by a user.

These and/or other aspects and advantages of the invention will become apparent and more readily appreciated from the following description of the exemplary embodiments, taken in conjunction with the accompanying drawings of which:
FIG. 1 is a block diagram of a display apparatus according to an exemplary embodiment of the present general inventive concept;
FIGS. 2A and 2B are display screens displaying a plurality of letters;
FIGS. 3A through 4B are display screens displaying a character string divided into a preset edit unit;
FIGS. 5A and 5B are display screens displaying the selected character string as an anticipated modification;
FIGS. 6A and 6B are display screens which display, at the same time, an original input by a user and an anticipated modification;
FIGS. 7A and 7B are display screens displaying the selected character string divided into the preset edit unit; and
FIG. 8 is a flowchart of a method of editing the letters displayed in the display apparatus according to an exemplary embodiment of the present general inventive concept.

Reference will now be made in detail to an exemplary embodiment of the present general inventive concept, examples of which are illustrated in the accompanying drawings, wherein like reference numerals refer to the like elements throughout. The exemplary embodiment is described below in order to explain the present general inventive concept by reference to the drawings.

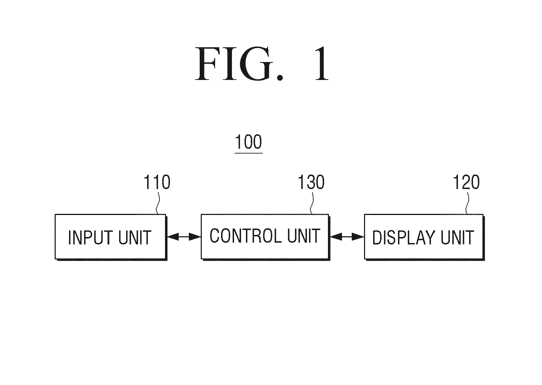

FIG. 1 is a block diagram of a display apparatus according to an exemplary embodiment of the present general inventive concept.

Referring to FIG. 1, a display apparatus 100 includes an input unit 110, a display unit 120, and a control unit 130. The display apparatus 100 can be implemented using a mobile terminal including a display screen, such as mobile phone, MP3 player, Portable Multimedia Player (PMP), and Personal Digital Assistant (PDA). Notably, the display apparatus 100 is not limited to the above-listed terminals and may be implemented using large-scale terminals such as a digital TV and a Personal Computer (PC).

The input unit 110 receives a user command. In particular, the input unit 110 can receive a plurality of letters input from the user; can receive a selection command for the plurality of the letters, and can receive a user command of editing the letters received from the user. Herein, the input unit 110 can be implemented using a touch pad or a pointing device, and can receive the user command using an On Screen Keyboard (OSK). Herein, the OSK indicates a virtual keyboard for displaying the keyboard on a display screen to input the user command using the displayed keyboard.

While the input unit 110 is implemented using the touch pad or the pointing device (for example, a mouse and a pointing device based on motion recognition), the input unit 110 is not limited thereto; the input unit 110 can adopt any input device capable of controlling the letter input and the pointer on the display screen, such as general keyboard and mouse. When a plurality of input devices suitable for the user commands is equipped, each user command may be input through a separate input device.

The display unit 120 displays the plurality of the letters input through the input unit 110. Under the control of the control unit 130, the display unit 120 can display the selected character string divided into a preset edit unit.

The display unit 120 can be implemented as various display panels such as a Cathode Ray Tube (CRT), a Liquid Crystal Display (LCD) and a Plasma Display Panel (PDP).

The control unit 130 can control operations of the display apparatus 100. In particular, when the selection command is input for at least one of the plurality of the displayed letters through the input unit 110, the control unit 130 selects a character string including the selected letter, in order to divide the selected character string into the preset edit unit, and to display the preset edit unit through the display unit 120, but is not limited thereto. Even when a selection is made in the vicinity of the plurality of the displayed letters, the control unit 130 can select the character string including a letter near the selected vicinity.

Herein, the preset edit unit can be at least one of the word, the syllable, the letter, and the phoneme. The preset edit unit can be changed by the user. The preset edit unit can be set as the default in the manufacturing phase of the device.

According to the user command of editing the letters input through the input unit 110, the control unit 130 can edit the selected character string based on the preset edit unit.

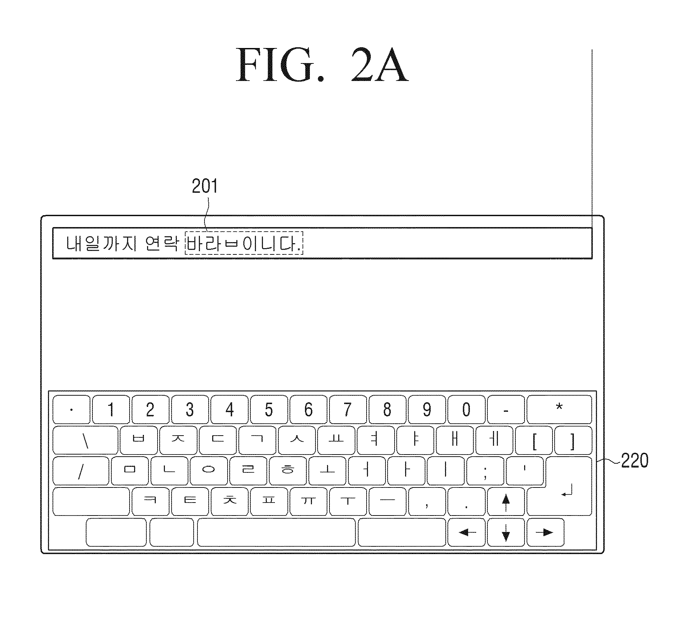

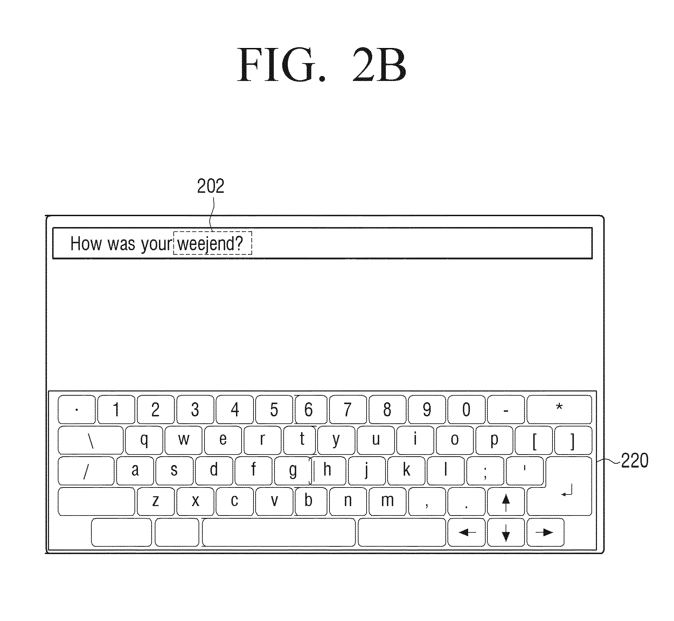

Hereafter, the operations of the display unit 120 are explained in detail with both Korean input and English input. Specifically, FIGS. 2A, 3A, 4A, 5A, 6A and 7A depict a case involving Korean input, and FIGS. 2B, 3B, 4B, 5B, 6B and 7B depict a case of English input.

FIGS. 2A and 2B depict display screens which display a plurality of letters.

Referring to FIG. 2A, when the user intends to input 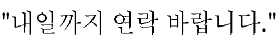 but incorrectly inputs 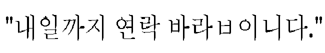 using the OSK 210 displayed in the display screen, the display unit 120 displays the plurality of the input letters 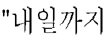 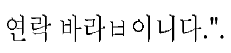

To modify the incorrect 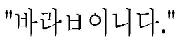 201, the user can input the selection command for at least one letter of 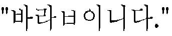 201 through the input unit 110. When the user inputs the selection command to tap or point at least one letter 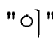 of 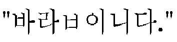 201, the control unit 130 selects the character string 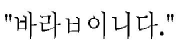 201 including the selected letter 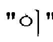 and divides 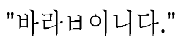 into the preset edit unit. For example, when the preset edit unit is the syllable or the phoneme, 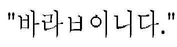 is divided into 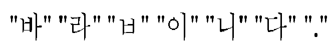 and the display unit 120 can display the divided character string 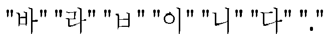

Herein, while only 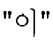 of 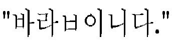 displayed in the display screen is selected by way of example, 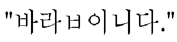 can be selected when the selection command is input for 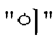 and 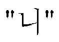 or the selection command is input for the region between 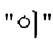 and 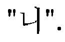 That is, when the selection command is input inside the region occupied by the character string 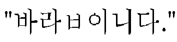 displayed on the display screen, the control unit 130 can select 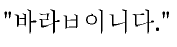

In case of the English input, when the user intends to input "How was your weekend?" but incorrectly inputs "How was your weejend?" using the OSK 220 displayed in the display screen, the display unit 120 displays the plurality of the input letters "How was your weejend?"

To modify the incorrect "weejend?" 202, the user can input the selection command for at least one letter of "weejend?" 202 through the input unit 110. When the user inputs the selection command to tap or point to at least one letter "n" of "weejend?" 202, the control unit 130 selects the character string "weejend?" 202 including the selected letter "n" and divides "weejend?" into the preset edit unit. For example, when the preset edit unit is the phoneme, "weejend?" is divided into "w" "e" "e" "j" "e" "n" "d" "?"and the display unit 120 can display the divided character string ""w" "e" "e" "j" "e" "n" "d" "?" [01] Herein, while only "n" of "weejend?" displayed in the display screen is selected by way of example, "weejend?" can be also selected when the selection command is input for n" and "d" or the selection command is input for the region between "n" and "d." That is, when the selection command is input inside the region occupied by the character string "weejend?" displayed on the display screen, the control unit 130 can select "weejend?"

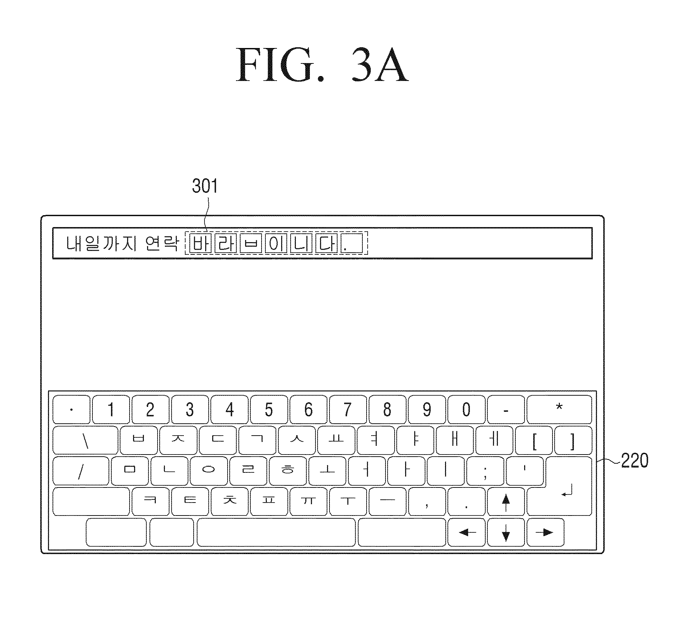

Meanwhile, the display unit 120 can display the character string divided by the control unit 130 into the preset edit unit, as separate icons. The display unit 120 can enlarge and display the selected character string, which shall be explained in detail by referring to FIGS. 3A through 4B.

FIGS. 3A through 4B depict display screens displaying the character string divided into the preset edit unit.

Referring to FIG. 3A, the character string 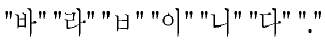 divided into the preset edit unit is displayed as separate icons 301. The selected character string is iconized and the user can easily edit the letters by manipulating the icons.

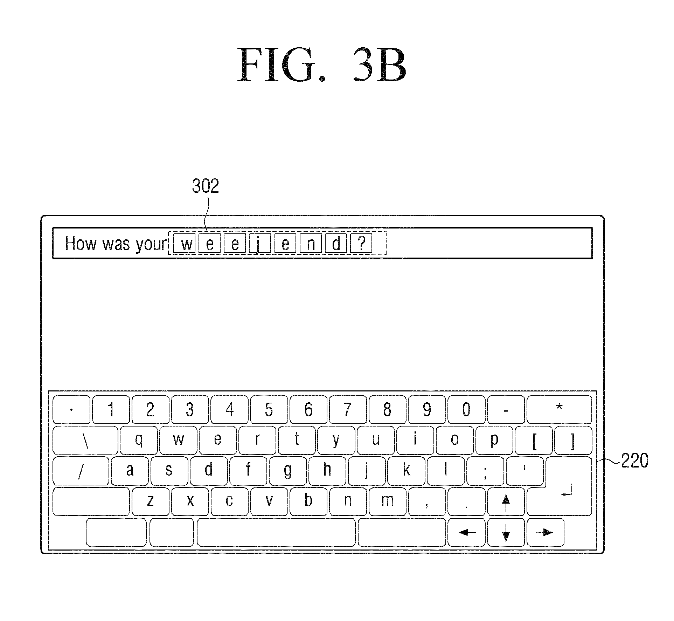

Referring to FIGS. 3A and 3B, the character strings 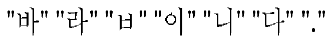 301 and "w" "e" "e" "j" "e" "n" "d" "?" 302 divided into the preset edit unit are displayed as separate icons. The selected character string is iconized and the user can easily edit the letters by manipulating the icons.

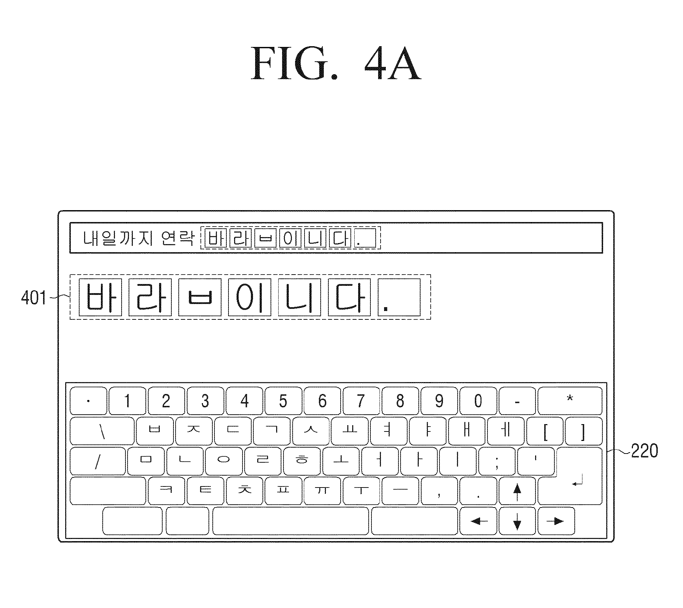

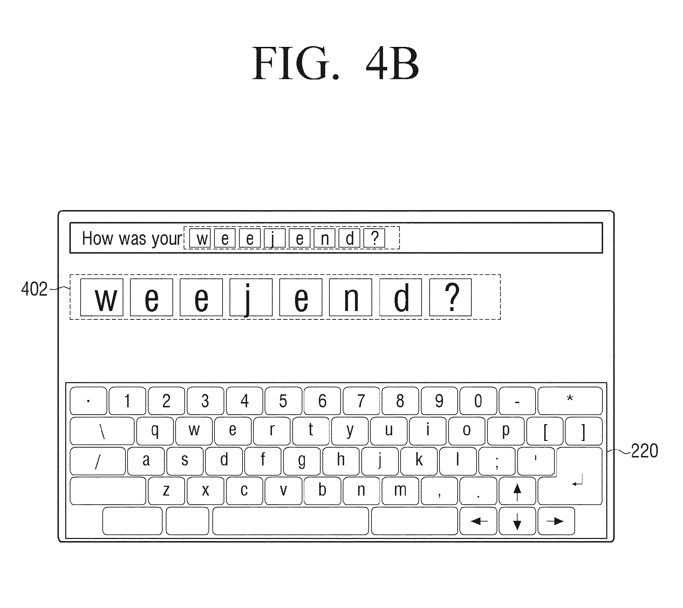

Referring to FIGS. 4A and 4B, the selected character strings 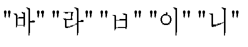 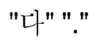 401 and "w" "e" "e" "j" "e" "n" "d" "?" 403 are enlarged and displayed. The selected character string is enlarged and displayed so that the user can more easily edit the letters.

Meanwhile, the character string enlarged may be displayed in connection with the existing letters displayed, in a separate region on the existing display screen as shown in FIGS. 4A and 4B, or in a totally new screen.

The display unit 120 can display the character string selected by the control unit 130 in at least one of the form of the original input by the user and the anticipated modification form of the selected character string, which shall be described by referring to FIGS. 3A through 6B.

In FIGS. 3A through 4B, the selected character string 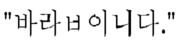 or "weejend?" is displayed as 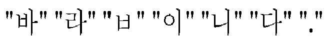 or "w" "e" "e" "j" "e" "n" "d" "?" as originally input by the user.

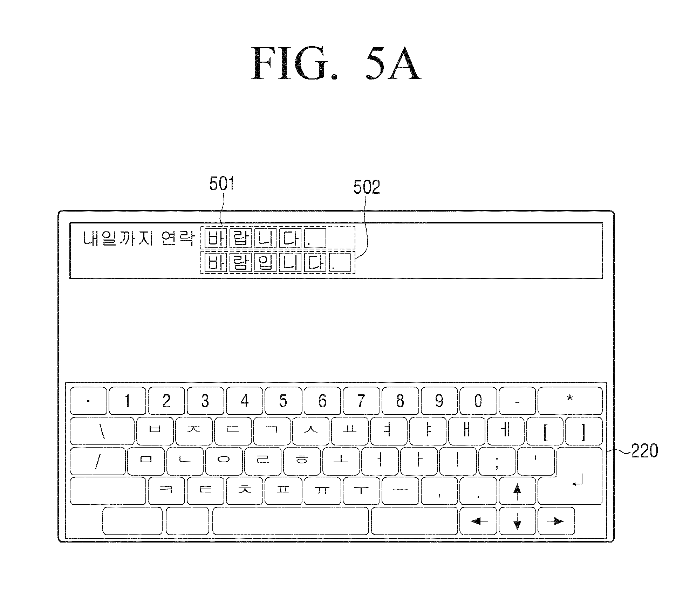

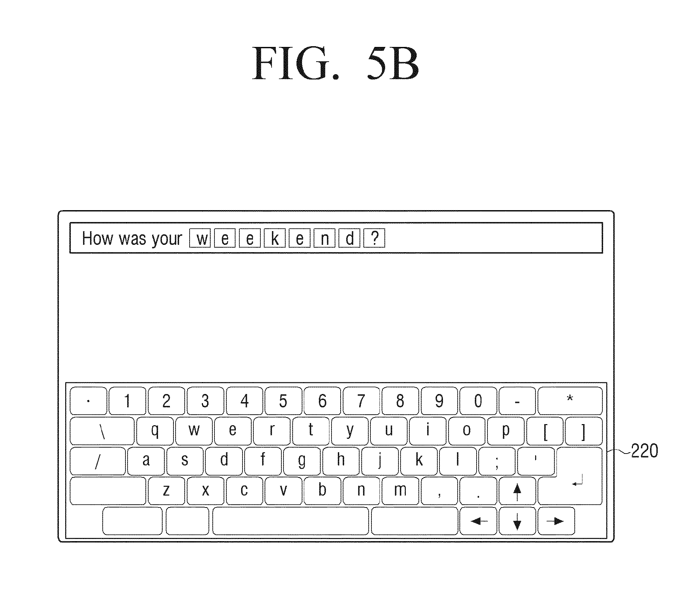

FIGS. 5A and 5B depict display screens displaying the selected character string as the anticipated modification.

Referring to FIG. 5A, the anticipated modification 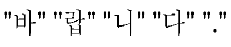 501 of the selected character string is displayed. When the anticipated modification is plural, the multiple anticipated modification can be displayed together with another anticipated modification 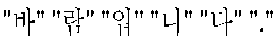 502 as shown in FIG. 5A.

Referring to FIG. 5B, the anticipated modification "w" "e" "e" "k" "e" "n" "d" "?" 503 of the selected character string is displayed. When the anticipated modification is plural, the multiple anticipated modifications can be displayed as shown in FIG. 5A.

The method for determining the incorrect letter and predicting the modification is widely used in the related art of the character correction method, and thus shall only be briefly explained.

For example, the input letter is compared with characters pre-stored to a database. When there is no matching character, the input letter can be determined as the incorrect letter. The input letter is compared with the characters pre-stored to the database in terms of the syllable or the phoneme and thus most similar character can be predicted as the correct modification. Yet, the present general inventive concept is not limited to this method and is applicable to any method for determining whether the letter is mis-typed and predicting the correct modification.

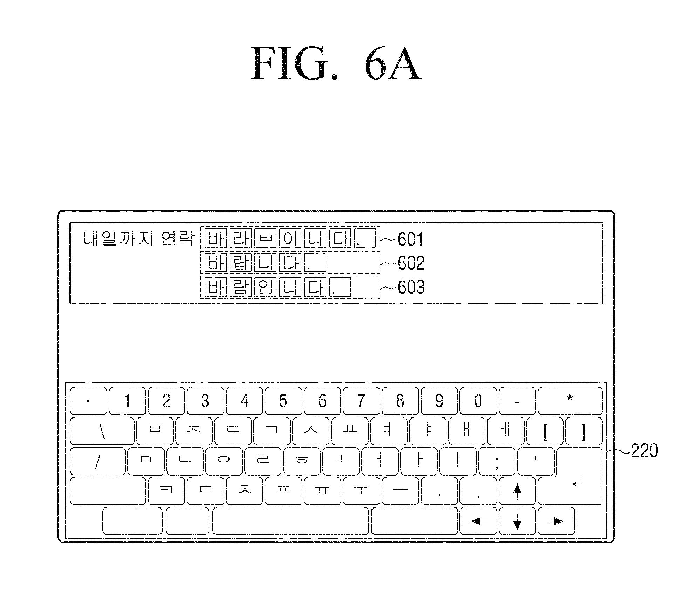

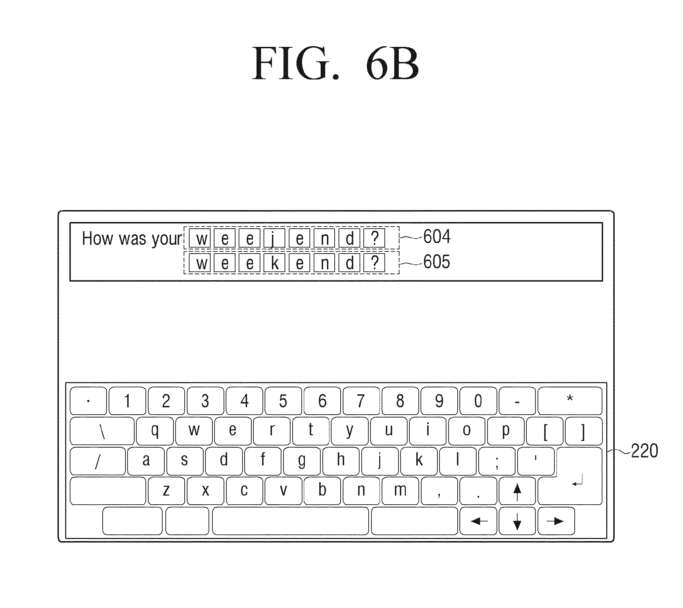

FIGS. 6A and 6B depict display screens displaying the original input of the user and the anticipated modification at the same time.

Referring to FIG. 6A, the original input of the user 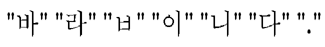 601 and the anticipated modification 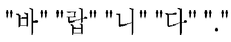 602 below the original user input are displayed at the same time. When the multiple anticipated modifications are provided as shown in FIG. 5A, a plurality of anticipated modifications can be displayed together with another modification 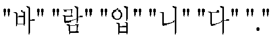 603. The anticipated modification can be displayed at various locations, for example, below or above the original input or in a lower or upper portion on the display screen.

Herein, the non-overlapping icon 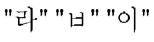 601, 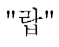 602, and 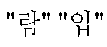 603 can be displayed as a single icon like 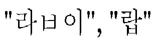 and 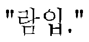 Thus, the user can more easily edit the letters.

Referring to FIG. 6B, the original input of the user "w" "e" "e" "j" "e" "n" "d" "?" 604 and the anticipated modification "w' "e" "e" "k" "e" "n" "d" "?" 605 below the original user input are displayed at the same time. When multiple anticipated modifications are provided, as shown in FIG. 5A, a plurality of anticipated modifications can be displayed. The anticipated modification can be displayed at various locations, for example, below or above the original input, or in a lower or upper portion on the display screen, etc.

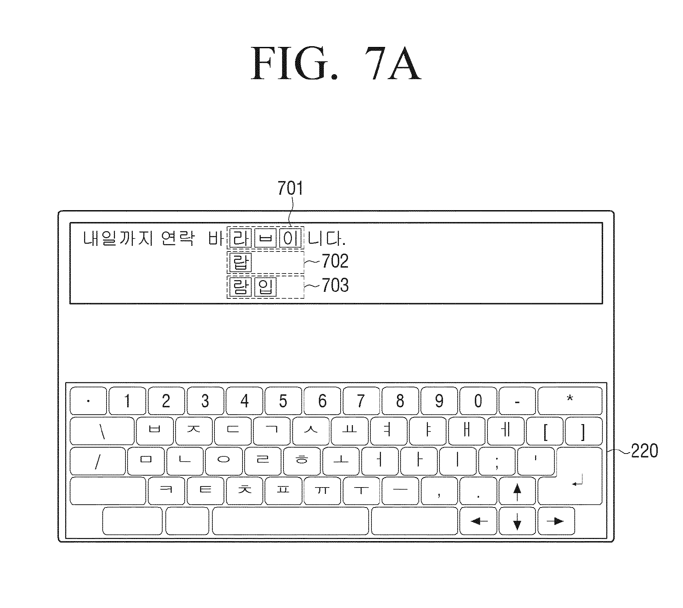

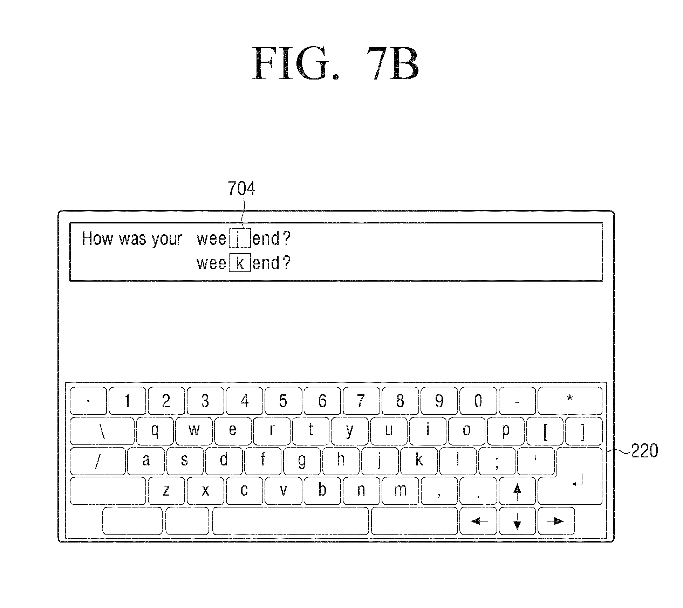

The control unit 130 can determine whether it is necessary to modify the selected character string, and control the display unit 120 to divide and display only the part of the selected character string to be modified into the preset edit unit, which is explained in detail with reference to FIGS. 7A and 7B.

FIGS. 7A and 7B depict display screens displaying the selected character string divided into the preset edit unit.

In FIG. 7A, the control unit 130 selects the character string 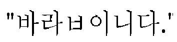 according to the user's selection command and determines whether the modification is required by checking the Korean spelling of the selected character string 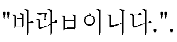 Since the character string 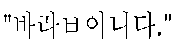 is incorrectly spelled in Korean, the control unit 130 can determine that modification is needed. Upon determining the required modification, the control unit 130 can compare with the anticipated modification 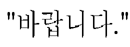 determine that the different part 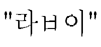 needs to be modified, and divide and display 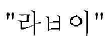 into 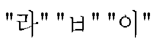 701 based on the preset edit unit. Hence, the user can edit the letters more easily by selecting only the letter to modify.

Meanwhile, even when only the part to be modified is displayed, the part to be modified can be displayed in at least one of the form of the original user input 701 and the anticipated modification form of the selected character string, and the plurality of the anticipated modifications 702 and 703 can be provided.

In FIG. 7B, the control unit 130 selects the character string "weejend?" according to the user's selection command and determines whether the modification is necessary by checking the English spelling of the selected character string "weejend?" Since the English spelling of "weejend?" is incorrect, the control unit 130 can determine that modification is required. Upon determining the modification required, the control unit 130 can compare it with the anticipated modification "weekend?" determine the different "j" as the part to be modified, and divide and display "j" 704 according to the preset edit unit. It is noted that the part to modify can be displayed in at least one of the form 704 originally input by the user and the anticipated modification form 705 of the selected character string. Hence, the user can edit the letters more easily by selecting only the letter to be modified.

Hereafter, the method of the control unit 130 of editing the selected character string is explained in detail by referring to FIGS. 3A, 3B, and 5A through 6B.

According to the user command to edit the letters, the control unit 130 can select the icon which corresponds to the preset edit unit and perform at least one of a modification, a deletion, and a location change of the selected icon. Herein, the user command to edit the letters includes a user command for selecting the letter and a user command for manipulating and editing the selected letter. The user command can be at least one of drag and drop, flicking, pointing, click and tap.

Herein, to ease the understanding, the operations of the control unit 130 are described in view of the user.

The icon can be deleted when the user drags and drops or flicks the icon to delete into a particular region on the display screen. Herein, the particular region can be a region excluding the display region of the input letters, a region excluding the location of the corresponding icon, or a region separately created on the display screen. The corresponding icon may be selected through the tapping, the clicking, or the pointing, and then deleted using a separated delete button. The separate delete button can be provided on the OSK or a keyboard.

For example, in FIG. 3, the user can delete the icons 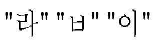 to delete from the icons 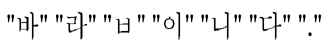 which corresponds to the preset edit unit displayed in the display unit 120 using the drag and drop or the flicking through the input part 110, and select and delete 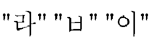 respectively by inputting the delete button.

In FIG. 3B, the user can delete the icon "j" to delete "j" from the icons "w" "e" "e" "j" "e" "n" "d" "?" which correspond to the preset edit unit displayed in the display unit 120, and can select and delete the icon "j" using the drag and drop or the flicking through the input part 110.

The location of the icon can be changed by dragging and dropping the icon to change to an intended location. Alternatively, the location of the icon can be changed by flicking the icon in a particular direction or by selecting the icon to be changed and then changing the location using a direction key of the OSK, or the keyboard.

For example, to move the location of the icon 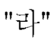 behind the icon 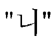 in FIG. 3A, the user can change the location of the icon 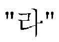 by dragging and dropping the icon 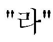 between the icon 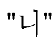 and the icon 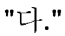 Alternatively, the user can flick the icon 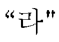 to the right to lie between 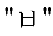 and 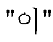 and then flick again to the right to lie between 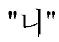 and 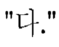 The user may select the icon 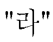 and then change its location by inputting the right direction button of the OSK or the keyboard twice.

In FIG. 3B, to move the location of the icon "n" in front of the icon "j," the user can change the location of the icon "n" by dragging and dropping the icon "n" between the icon "e" and the icon "j." Alternatively, the user can flick the icon "n" to the left twice to lie between "e" and "j." After selecting the icon "n," the user may change its location by inputting the left direction button of the OSK or the keyboard twice.

The icon can be modified by selecting the icon to modify and inputting a new letter using the OSK or the keyboard, or by directly inputting the letter to modify like handwriting input using the touch pad or the pointer. Alternatively, when the anticipated modification icon is displayed, the user may modify the icon by selecting the modification icon or by selecting the modification icon and then inputting a modification button of the OSK or the keyboard. When the original icon and the anticipated modification icons are displayed at the same time and the anticipated modification icons include the icon to be modified, the user can modify the icon by dragging and dropping the corresponding icon onto the icon to be modified.

For example, to modify the icon 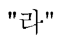 to 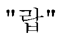 in FIG. 3A, the user can select 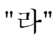 and then input 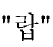 using the OSK or the keyboard, or input 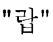 like the handwriting input using the touch pad or the pointer. In FIG. 5A, the user can modify the icon by selecting 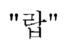 or by selecting 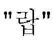 and then inputting the modification button. In this case, when the user selects and modifies 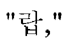 it is advantageous that the control unit 130 modify 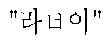 to 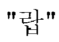 not to leave 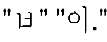 When the original form and the anticipated modification form are displayed at the same time as shown in FIG. 6A, the user can modify the letter by dragging and dropping 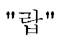 of the anticipated modification form 602 to the icon 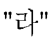 of the original form 601.

To modify the icon "j" to "k" in FIG. 3B, the user can select "j" and then input "k" using the OSK or the keyboard, or input "k" like the handwriting input using the touch pad or the pointer. In FIG. 5B, the user can modify the icon by selecting "k" or by selecting "k" and then inputting the modification button. When the original form and the anticipated modification forms are displayed at the same time as shown in FIG. 6B, the user can modify the letter by dragging and dropping "k" of the anticipated modification form 605 to the icon "j" of the original form 604.

The control unit 130 can select the region between at least two icons which correspond to the preset edit unit in response to the user command for the letter editing, and can insert the icon which corresponds to the new input letter into the selected region.

For example, to insert 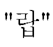 between the remaining icons 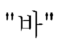 and 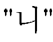 after deleting 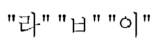 in FIG. 3A, the user can select the region between 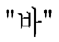 and 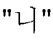 and input 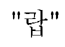 using the OSK or the keyboard. Alternatively, the user may insert 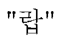 by selecting the region between 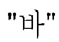 and 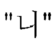 and then input 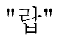 like the handwriting input using the touch pad or the pointer. When the original form and the anticipated modification forms are displayed at the same time as shown in FIG. 6A, the user may insert 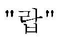 by dragging and dropping 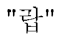 of the anticipated modification form 602 into the region between 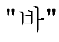 and 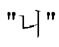 of the original form 601.

When the user wants to delete "j" and insert "k" instead in FIG. 3B, the user can select the region between the second "e" and the third "e" and input "k" using the OSK or the keyboard. Alternatively, the user may insert "k" by selecting the region between the second "e" and the third "e" and then input "k" like the handwriting input using the touch pad or the pointer. When the original form and the anticipated modification forms are displayed at the same time as shown in FIG. 6B, the user may insert "k" by dragging and dropping "k" of the anticipated modification form 605 into the region between the second "e" and the third "e" of the original form 602.

While the letter editing is described, in the view of the user, to ease understanding, such editing operations can be carried out by the control unit 130, according to the user command.

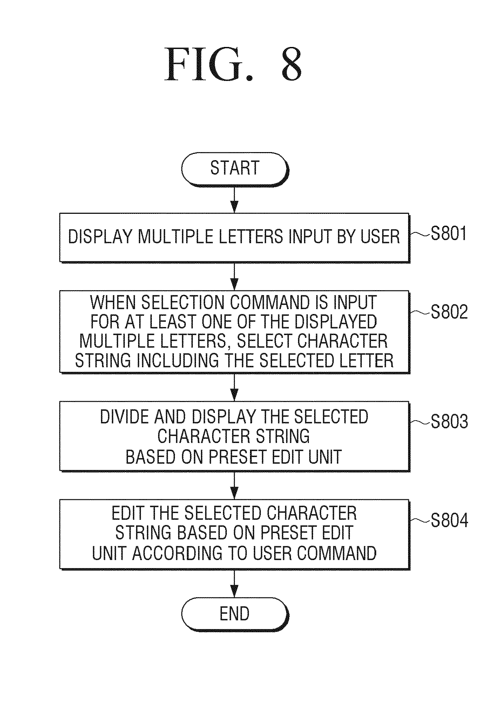

FIG. 8 is a flowchart of a method of editing the letters displayed in the display apparatus according to an exemplary embodiment of the present general inventive concept.

Referring to FIG. 8, the method of editing the letters displayed in the display apparatus displays the plurality of letters input by the user (S801). When the selection command is input for at least one of the displayed letters, the method selects the character string including the selected letter (S802). Next, the method divides and displays the selected character string into the preset edit unit (S803).

Herein, the step for dividing and displaying based on the preset edit unit (S803) can display the character string divided into the preset edit unit as separate icons, enlarge and can display the selected letter. The step for dividing and displaying based on the preset edit unit (S803) can display the selected letter in at least one of the original form input by the user and the anticipated modification form of the selected character string, determine whether it is necessary to modify the selected character string, and divide and display only the part to modify of the selected character string based on the preset edit unit. The preset edit unit can be at least one of word, a syllable, and a phoneme.

According to the user command, the method edits the selected character string based on the preset edit unit (S804). When the icon which corresponds to the preset edit unit is selected, the step of editing the selected character string (S804) can perform at least one of the modification, deletion, and location change of the selected icon, according to the user command.

When the region between at least one of the icons which correspond to the preset edit unit is selected in response to the user command, the method can insert the icon which corresponds to the new input letter into the selected region.

The above-mentioned letter editing method according to various embodiments of the present general inventive concept may be stored in recording media of various types and may be embodied by program codes executable by a CPU of an electronic device. In detail, the codes for executing the letter editing method can be stored in various recording media readable by a terminal, such as Random Access Memory (RAM), flash memory, Read Only Memory (ROM), Erasable Programmable ROM (EPROM), Electronically Erasable and Programmable ROM (EEPROM), register, hard disc, removable disc, memory card, USB memory, CD-ROM, etc.

Although a few exemplary embodiments of the present general inventive concept have been shown and described, it would be appreciated by those skilled in the art that changes may be made in these exemplary embodiments without departing from the principles of the invention, the scope of which is defined in the claims.

## Claims

1. A method of editing letters displayed on a display apparatus, the method comprising:
displaying a plurality of letters input by a user;
when a selection command is input for at least one of the plurality of the displayed letters, selecting a character string including the selected letter;
dividing and displaying the selected character string based on a preset edit unit; and
editing the selected character string based on the preset edit unit, according to a user command.

2. The method of claim 1, wherein the operation of dividing and displaying based on the preset edit unit displays as separate icons the selected character string divided into the preset edit unit.

3. The method of claim 1 or 2, wherein the operation of dividing and displaying based on the preset edit unit enlarges and displays the selected character string.

4. The method of claims 1, 2 or 3, wherein the operation of dividing and displaying based on the preset edit unit displays the selected character string in at least one of an original form input by the user and an anticipated modification form of the selected character string.

5. The method of any one of claims 1 to 4, wherein the operation of dividing and displaying based on the preset edit unit determines whether it is necessary to modify the selected character string, divides and displays only a part that needs modification of the selected character string, based on the preset edit unit.

6. The method of any one of claims 1 to 5, wherein the preset edit unit is at least one of a word, a syllable, a phoneme, a number and a symbol.

7. The method of any one of claims 2 to 6, wherein, when an icon which corresponds to the preset edit unit is selected, the operation of editing the selected character string performs at least one of modification, deletion and location change of the selected icon, according to the user command.

8. The method of any one of claims 1 to 7, wherein the user command is at least one of drag and drop, flicking, pointing, click and tap.

9. The method of any one of claims 2 to 8, wherein, when a region between at least two icons which correspond to the preset edit unit is selected, the operation of editing the selected character string inserts an icon which corresponds to a new letter input into the selected region, according to the user command.

10. The method of any one of claims 1 to 10, wherein the display apparatus receives the letter using an On Screen Keyboard.

11. A display apparatus comprising:
an input arranged to receive a user command;
a display arranged to displays the plurality of the input letters when a plurality of letters is input through the input unit; and
a controller arranged to controls a character string including the selected letter and controlling the display unit to divide and display the selected character string based on a preset edit when a selection command is input for at least one of the plurality of the displayed letters through the input unit, wherein the controller edits the selected character string based on the preset edit unit, according to a user command of editing the letters.

12. The display apparatus of claim 11, wherein the display is arranged to display, as separate icons, the character string divided into the preset edit unit.

13. The display apparatus of claim 11 or claim 12, wherein the display is arranged to enlarge and display the selected character string.

14. The display apparatus of claims 11, 12 or 13, wherein the display is arranged to display the selected character string in at least one of an original form input by the user and an anticipated modification form of the selected character string.

15. The display apparatus of any one of claims 11 to 14, wherein the controller is arranged to determine whether it is necessary to modify the selected character string, and to control the display to divide and display only a part of the selected character string which needs modification based on the preset edit unit.
